# EUROPEAN PATENT APPLICATION

(11) **EP 2 362 622 A1**
(43) Date of publication of application: **31.08.2011**
(21) Application number: 10164816.0
(22) Date of filing: 03.06.2010
(51) Int. Cl.: H04M 3/428

(54) **Selective call queuing mechanism**

(30) Priority: 16.02.2010 IN CH03982010
(71) Applicant: Alcatel Lucent, 75007 Paris (FR)
(72) Inventor: Mohanty, Asimananda, 122015, Gurgaon (IN); Sachdeva, Ruchi, New Delhi 11024 (IN)
(74) Representative: Sciaux, Edmond

(57) **Abstract**

A mechanism for selective call queuing in mobile devices is disclosed. The present application relates to communication systems and, particularly, to call queuing mechanisms in communication systems. Existing call queuing mechanisms do not offer services for users to queue an incoming call on a per call basis i.e., user cannot decide to queue calls when it is an important call and in case the call is not important one deactivate the call queuing service. Selective call queuing mechanism allows user to activate the queuing service for one call and deactivate the service for another call. When the user receives an important call he may opt to activate the call queuing service for that call. In that case, the application server makes a record of the call received and user may be intimated about his queued callers later when his call is released.

## Description

### TECHNICAL FIELD

The present invention relates to communication systems and, more particularly, to call queuing mechanisms in communication systems.

### BACKGROUND

Present day communication networks offer a wide variety of call queuing services, when a person is busy attending another call. Call queuing services are limited to sending notification of one incoming call at a time and placing one call at a time on hold, while communicating with a third party.

Some call waiting services allow placing a call on hold when there is another important incoming call and alternate between the two. Also, such services send a beep tone to the user when another party is trying to reach him. If the user is attending an important call, he may be disturbed by the periodic beeping tone. Since resources are expensive, conventional call queuing features do not provide for multiple calls in queuing state. As a result, there is a limit on the number of calls that may be placed in the queue.

Existing call queuing features are static in nature. There is no mechanism for the user to decide if he needs to be alerted with the incoming calls on per call basis.

### SUMMARY

In view of the foregoing, an embodiment herein provides an apparatus for selective call queuing in a mobile communication network adapted for receiving a message from a called user for activation of selective call queuing service when desired by user, activating the selective call queuing service on receipt of the message from the user, querying a caller if he would like to be placed in a queue on receiving an incoming call from the caller when the service is active and maintaining a list of the caller who would like to be placed in the queue. The apparatus is adapted for continuing the service for next call on request from the user. The apparatus is adapted for sending notification message when user's call is released. The apparatus is adapted for activating a timer on continuing the service for next call and discarding the recorded list when the recorded list is viewed by the user. The apparatus is adapted for deactivating the service when the recorded list is discarded. The apparatus is adapted for activation of the service when current call is on hold. The message for activation of the service includes a service code.

Also, disclosed herein is a method for selective call queuing in a mobile communication network. The method comprising of an application server, a called user, plurality of callers performing steps of a called user sends a message to the application server for activation of selective call queuing service when the called user receives a call, the application server activating the service for the called user on receipt of the message, application server recording list of callers who try to connect to the called user when the service is active, application server sending a notification to the called user to view the recorded list. The method wherein the recorded list is sent to the user after the call is released. The recorded list is discarded after the user views the recorded list. The selective call queuing is activated on per call basis. The recorded list includes details of callers who are in queue. The details of callers who left the queue are provided separately to the user. The recorded list is discarded when the called user does not wish to connect to any callers in the recorded list.

These and other aspects of the embodiments herein will be better appreciated and understood when considered in conjunction with the following description and the accompanying drawings.

### BRIEF DESCRIPTION OF THE FIGURES

The embodiments herein will be better understood from the following detailed description with reference to the drawings, in which:

FIG. 1 illustrates a system for selective call queuing, according to an embodiment as disclosed herein;

FIG. 2a and 2b are flow charts depicting selective call queuing process, according to an embodiment as disclosed herein;

FIG. 3a and 3b are flow charts depicting a method for activating selective call queuing before making a call, according to an embodiment as disclosed herein;

FIG. 4 is a flow diagram depicting a method for sending request to the network, according to an embodiment as disclosed herein;

FIG. 5 is a flow diagram depicting a method for queuing calls, according to an embodiment as disclosed herein;

FIG. 6 is a flow diagram depicting a method of providing queued list to caller, according to an embodiment as disclosed herein;

FIG. 7 is a flow diagram depicting a scenario of continuation of call queuing, according to an embodiment as disclosed herein; and

FIG. 8 is a flow diagram depicting a scenario for user requesting for queued list, according to an embodiment as disclosed herein.

### DETAILED DESCRIPTION OF EMBODIMENTS

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

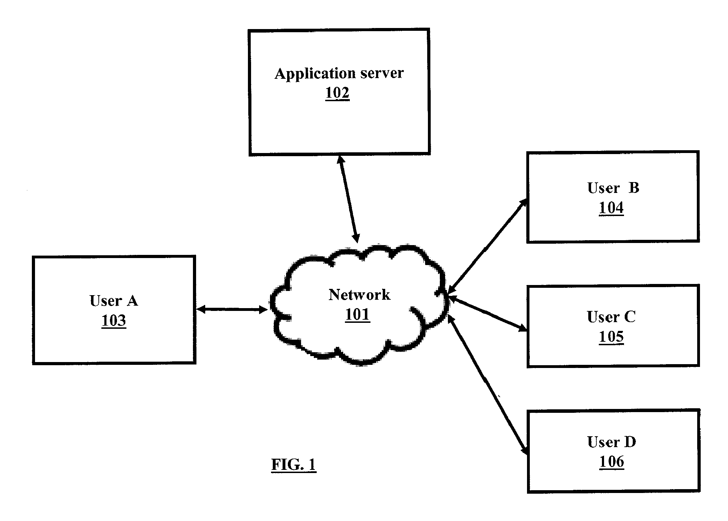

The embodiments herein disclose a method for selective call queuing by providing suitable system thereof. Referring now to the drawings, and more particularly to FIGS. 1 through 8, where similar reference characters denote corresponding features consistently throughout the figures, there are shown embodiments.

Systems and methods for selective call queuing are disclosed. A method, according to an embodiment herein, allows a user to queue his incoming calls on a per call basis, when he is busy attending another call. A user who is interested in using Selective Call Queuing (SCQ) service registers with the network operator for the service. On registration, the user is provided with a service code for activating the SCQ service when required. When the user receives a call and wishes not to be disturbed by any other incoming calls during this period, he may activate the service. Service activation may be done by the user after accepting the incoming call or before accepting the incoming call. Service activation may also be done by the user before placing a call. Service activation may be done by sending a Short Message Service (SMS) message with the assigned code for the service, or by simply pressing a key on his mobile phone that is configured for the service. In an example, user may send a SMS to a designated number say '123' with message as 'activate SCQ' for activation of the service or he may enter '#' key on his mobile phone for activation and so on. Once the user activates the service he can put all other calls in a queue while he is attending a call. Meanwhile, all the callers who are trying to reach the user are queued in a list. The callers may wish to wait in the queue or leave the queue when desired.

When the user has finished his call, he may be provided with the list of callers who tried to reach him when he was busy. The user may then choose if he wishes to connect with any of the callers from the list. If he doesn't want to connect with any callers, the process of queuing may be continued for the next call.

FIG. 1 illustrates a system for selective call queuing, according to an embodiment as disclosed herein. The network 101, an application server 102, and plurality of user's i.e., user A 103, user B 104, user C 105, and user D 106 together constitute the system. For illustrative purposes user A 103 may be called party and users B 104, C 105 and D 106 may be callers who initiate a call to user A 103.

The network 101 acts as a medium for connecting user B 104, user C 105, and user D 106 to user A 103. The network 101 may be built out of hierarchical transmission systems. The network 101 may be a mobile communication network, Session Initiation Protocol (SIP) network and the like. Network 101 directs the calls initiated by the users (i.e., user B 104, user C 105) towards user A 103. Network 101 also manages the calls throughout the session.

An application server 102 is a server that forms a part of the network elements. The application server 102 handles all the functionalities of the network 101. All Value Added Services (VAS) are managed by the application server 102. The application server 102 is configured to process the selective call queuing service for the users who request for the service. When the network 101 receives a request for the SCQ service, the network 101 directs the requests to the application server 102. The application server 102 then identifies the request and activates the service for the user. Further, the application server 102 takes up the functionality of recording the list of callers, who call the user registered with the service, when he is busy attending another call and the service is activated. The application server 102 sends the list of queued callers to the user once his call is released. On the other hand, user can also access the list from the application server 102 by sending a request for the same.

User A 103 may be a person who has activated the SCQ service and is using the service. User A 103 may be a called party to whom calls are made by callers (user B 104, user C 105 or user D 106) or user A 103 may be a calling party who activates a call to other users (user B 104, user C 105 or user D 106). Further, the SCQ service may be activated by user A 103 before setting up a call or sometime after he receives a call in case he is the called party.

User B 104, user C 105, user D 106 may be plurality of callers who try to connect to user A 103, when user A 103 is busy with another call. In another embodiment, user B 104, user C 105 and user D 106 may also be calling parties to whom the call may be set up by any other users.

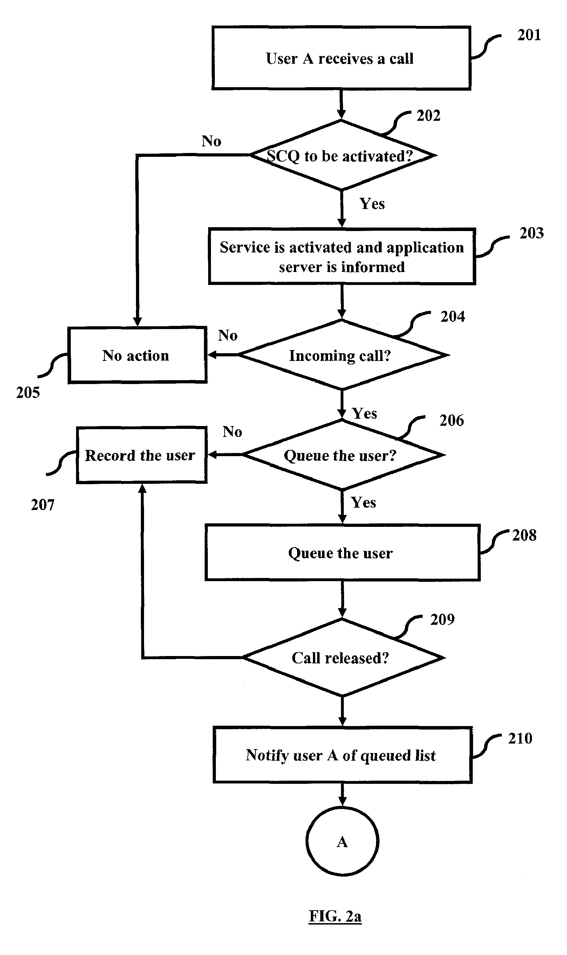

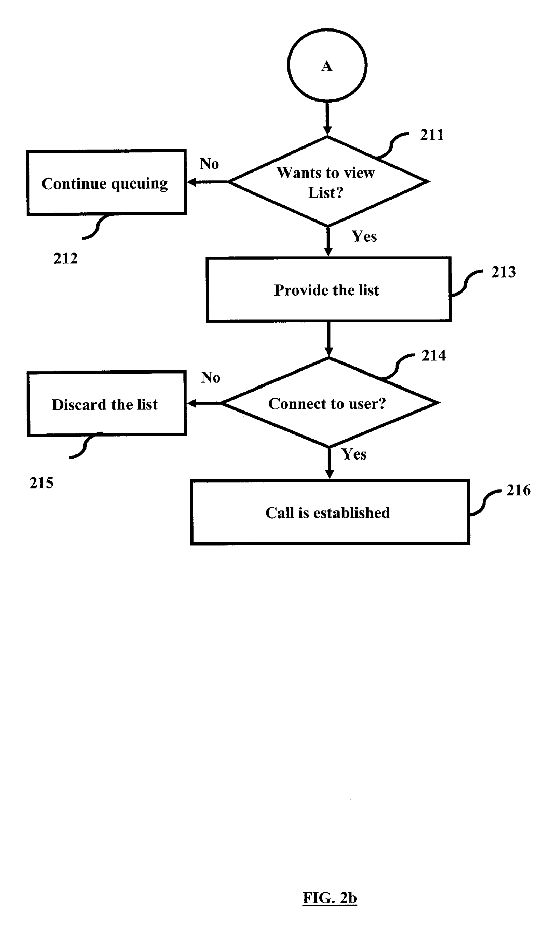

FIG. 2a and 2b are flow charts depicting a method for activating selective call queuing process after a call is received, according to an embodiment as disclosed herein. In an embodiment, user A 103 may register for Selective Call Queuing (SCQ) service with his network operator. On registration, user A 103 will be provided access to the SCQ service via a service code. The user A 103 can activate the SCQ service whenever he desires. User A 103 receives (201) an important call and is assumed to last for long. Hence, user A 103 prefers to use SCQ service during the call. A check (202) is made if user A 103 would want to activate the SCQ service. In case user A 103 is not interested in activating the SCQ service, no action is taken (205). If user A 103 is interested in the SCQ service he activates (203) the SCQ service by sending the assigned service code to the network operator, who further notifies the application server 102 that user A 103 has activated the SCQ service. In an embodiment, the SCQ service may also be activated by just dialing a key on the mobile phone of user A 103 that is configured for the SCQ service for instance, pressing '#' and so on. A check (204) is made if there is any incoming call during the time when user A 103 is busy on the call. In case, there is no other incoming call during the time no action is performed (205). If there is an incoming call, the service may ask (206) the caller (user B 104, user C 105 or user D 106) if he would like to be queued. In case the caller is not interested to be in the queue, he may be put (207) on a separate list and user A 103 may be notified about the call later by sending a notification message or the like. Further, caller may also be notified that he is not in the queue. In case the caller would like to be queued he is put (208) into the list for queued callers. Further, a check (209) is made if user A 103 is done with his call i.e., if his call is released. In case his call is released, user A 103 may be sent (210) a notification that he has a list of queued callers. A check is made (211) if user A 103 would like to view the list. The application server 102 may query the user A 103 if he wants to view the list of queued callers' right then. If user A 103 has another important call to make, he may send (212) a message to the application server 102 saying he will view the queued list later. If he wants to view the queued list he may request (213) for the list to the application server 102. On providing the queued list to the user A 103, the user A 103 may be asked (214) if he wishes to connect to any of the callers from the queued list of callers. In case he does not wish to connect to any callers the list may be discarded (215). On the other hand, if he wants to connect to any of the callers from the queued list, a call is established (216) with the desired caller. Further, the list is discarded. When user A 103 wishes to use the service again a new list is maintained for every call that he activates the SCQ service. The various actions in method 200 may be performed in the order presented, in a different order or simultaneously. Further, in some embodiments, some actions listed in FIG. 2 may be omitted.

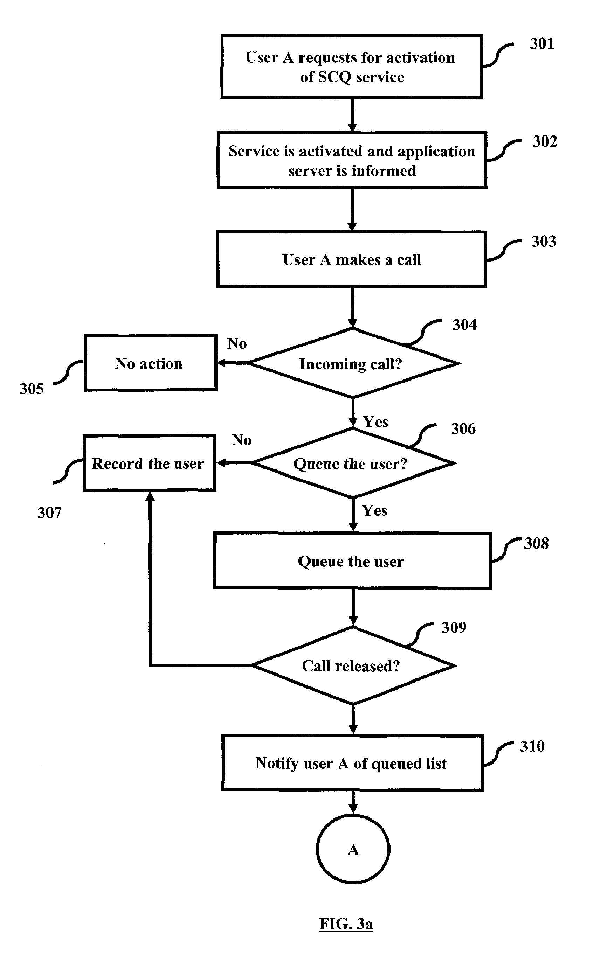

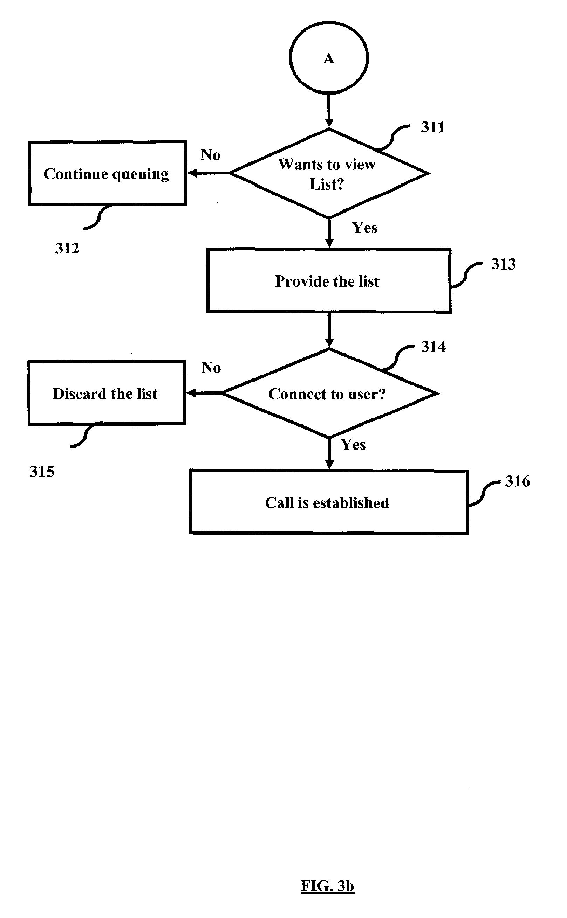

FIG. 3a and 3b are flow charts depicting a method for activating selective call queuing before making a call, according to an embodiment as disclosed herein. Consider user A 103 is a calling party who wishes to set up call to a called party user B 104. User A 103 has registered for the Selective Call Queuing (SCQ) service with the network operator. On registration, user A 103 will be provided access to the SCQ service via a service code. The user A 103 can activate the SCQ service whenever he desires. User A 103 sends (301) a request for activating SCQ service to the network operator. The request may be sent in the form of a SMS message or the like. In an embodiment, the SCQ service may also be activated by just dialing a key on the mobile phone of user A 103 that is configured for the SCQ service for instance, pressing '#' and so on. On sending a message for activating the SCQ service, the application server 102 is informed (302) that user A 103 has activated the SCQ service. User A 103 makes (303) a call to user B 104. User A 103 may not want to be disturbed during this call, so all incoming calls to user A 103 are queued.

A check (304) is made if there is any incoming call to user A 103 during the time when user A 103 is busy on the call. In case, there is no other incoming call during the time no action is performed (305). If there is any incoming call to user A 103, the service may ask (306) the caller (user C 105 or user D 106) if he would like to be queued. In case the caller is not interested to be in the queue, he may be put (307) on a separate list and user A 103 may be notified about the call later by sending a notification message or the like. Further, caller may also be notified that he is not in the queue. In case the caller would like to be queued he is put (308) into the list for queued callers. Further, a check (309) is made if user A 103 is done with his call i.e., if his call is released. In case his call is released, user A 103 may be sent (310) a notification that he has a list of queued callers. A check is made (311) if user A 103 would like to view the list. The application server 102 may query the user A 103 if he wants to view the list of queued callers' right then. If user A 103 has another important call to make, he may send (312) a message to the application server 102 saying he will view the queued list later. If he wants to view the queued list he may request (313) for the list to the application server 102. On providing the queued list to the user A 103, the user A 103 may be asked (314) if he wishes to connect to any of the callers from the queued list of callers. In case he does not wish to connect to any callers the list may be discarded (315). On the other hand, if he wants to connect to any of the callers from the queued list, a call is established (31b) with the desired caller. Further, the list is discarded. When user A 103 wishes to use the service again a new list is maintained for every call that he activates the SCQ service. The various actions in method 300 may be performed in the order presented, in a different order or simultaneously. Further, in some embodiments, some actions listed in FIG. 3 may be omitted.

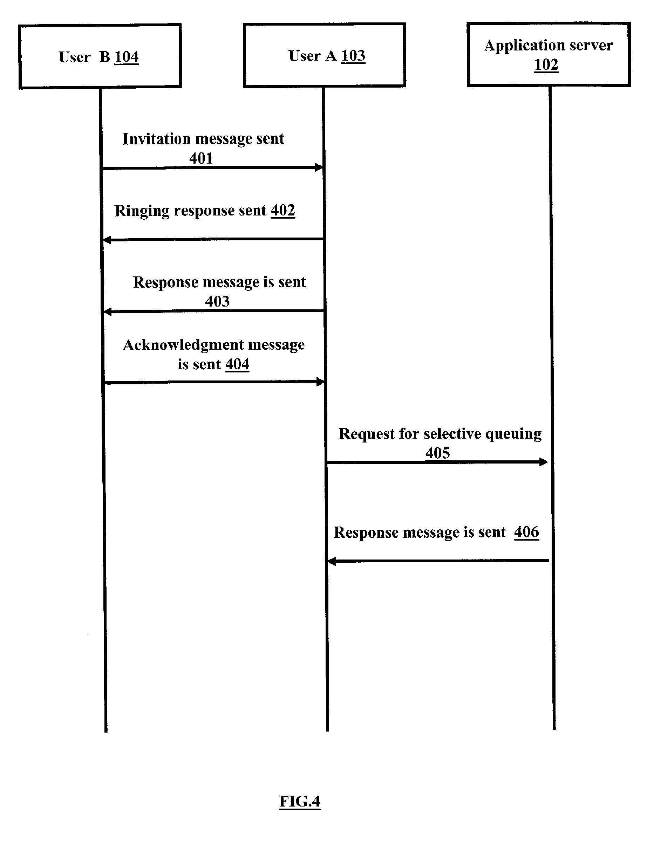

FIG. 4 is a flow diagram depicting a method for sending request to the network, according to an embodiment as disclosed herein. User A 103 has registered with the SCQ service. On registration, he may be provided with a code for activation of the call queuing service when desired. The code may be of the form '#123*', '*555' and so on and may be sent in the form of a SMS and the like. Consider, user B 104 makes a call to user A 103. User B 104 sends (401) call invite to the user A 103. The invite may be sent in the form of an invitation message. In response to the invitation message a ringing response is heard (402) by user B 104. Further, a response message may be sent (403) to user B 104. The response may be of the form such as 200 OK response and the like. User B 104 sends (404) an acknowledgment message to user A 103 for call establishment. In case, the call is an important call and is desired to last long, user A 103 may activate the SCQ service. The SCQ service may be activated by sending the assigned code through a SMS. The service may also have means to activate using user A's 103 mobile phone by pressing a key on the mobile phone that is configured for activating the service. User A's 103 request for service is sent (405) to the application server 102. The application server 102 identifies user A's 103 request and sends (406) a response message to user A 103. The response may be a 200 OK response. The application server 102 activates (407) the SCQ service. The various actions in method 400 may be performed in the order presented, in a different order or simultaneously. Further, in some embodiments, some actions listed in FIG. 4 may be omitted.

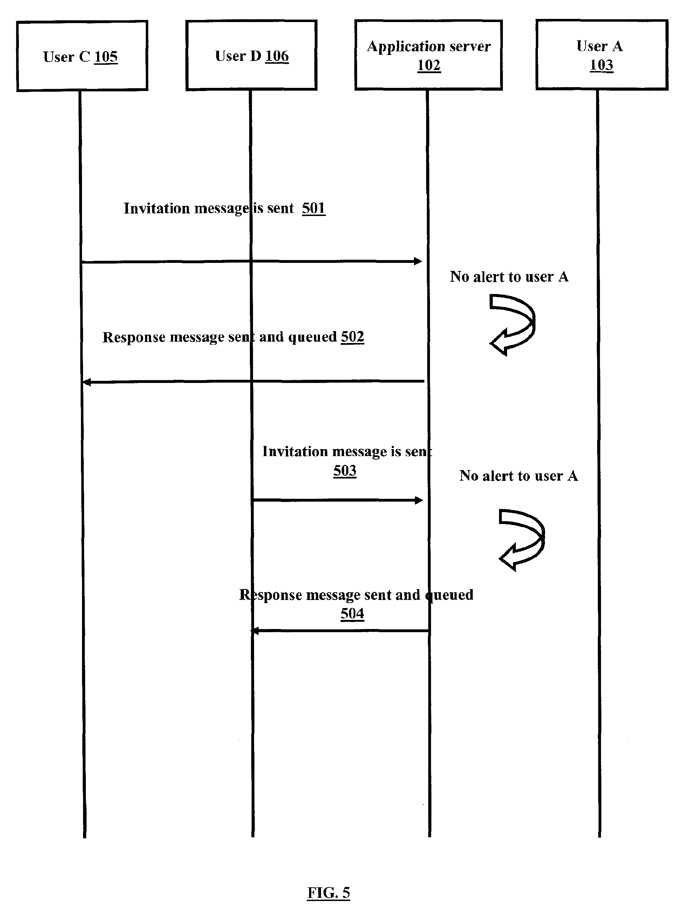

FIG. 5 is a flow diagram depicting a method for queuing calls, according to an embodiment as disclosed herein. Consider, user A 103 is attending a call and has activated the SCQ service. The application server 102 is alerted regarding the activated service and maintains a record of users who try to connect to user A 103 during the time when user A 103 is busy on a call. User C 104 may want to connect with user A 103. User C 104 sends (501) an invitation message to user A 103. The invitation message may be directed towards the application server 102 as the call queuing service is activated. The application server 102 sends (502) a response message to the user C 104 indicating that user A 103 is busy with a call. The response message may be in the form of 182 response and the like. User C 104 may be queued. No response is sent to user A 103 during this time, as he has activated the SCQ service. Thus, user A 103 is not disturbed during his call. Consider, user D 106 wants to connect with user A 103. User D 106 may send (503) an invitation message to user A 103. Since, user A 103 has SCQ service activated, the request is processed by the application server 102. The application server 102 sends (504) a response message to user D 106 intimating user D 106 that user A 103 is busy on a call. The application server 102 may also give an option to the caller if he would like to be queued or would want to exit from the queue. In case, the user D 106 wishes to wait in queue he is queued after user C 105. User A 103 is not intimated regarding the queuing of users C 105 and D 106. The various actions in method 500 may be performed in the order presented, in a different order or simultaneously. Further, in some embodiments, some actions listed in FIG. 5 may be omitted.

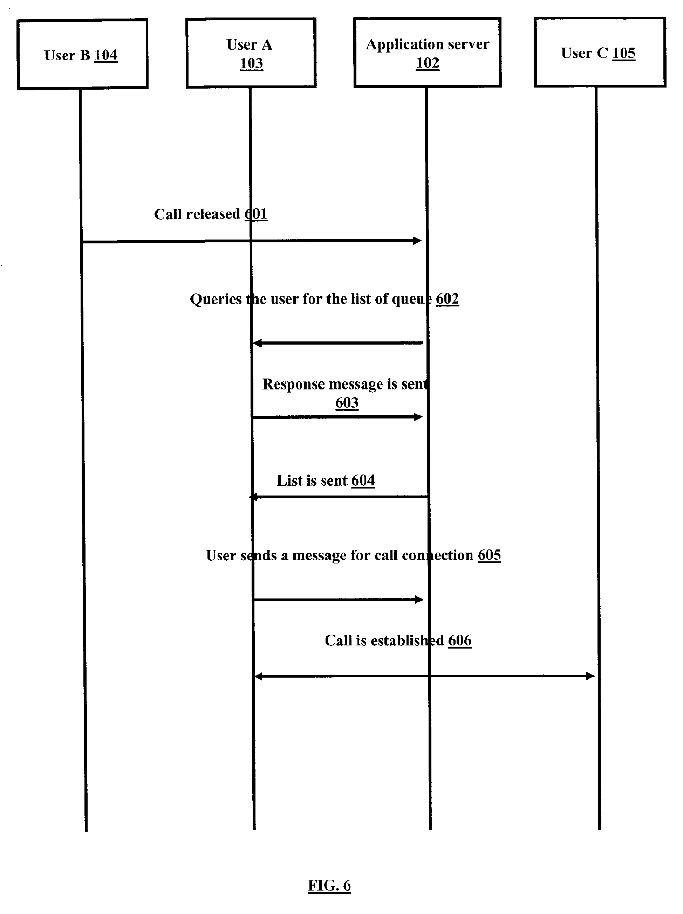

FIG. 6 is a flow diagram depicting a method of providing queued list to caller, according to an embodiment as disclosed herein. User A 103 has finished his call and call is released (601). On release of the call, user A 103 is given an option if he would like to view the list of queued calls. The option may be sent (602) by the application server 102 in the form of a message or a pop up may appear on the mobile phone of user A 103. In case, the user A 103 wishes to view the list he may send (603) a response message to the application server 102 requesting for the list. On receiving a response from user A 103 the application server 102 may send (604) the list of queued callers to user A 103. User A 103 may then select (605) a particular caller from the list (user C 105) to whom user A 103 would like to connect. Further, a call is established (606) with user C 105. The queued list may then be discarded. The various actions in method 600 may be performed in the order presented, in a different order or simultaneously. Further, in some embodiments, some actions listed in FIG. 6 may be omitted.

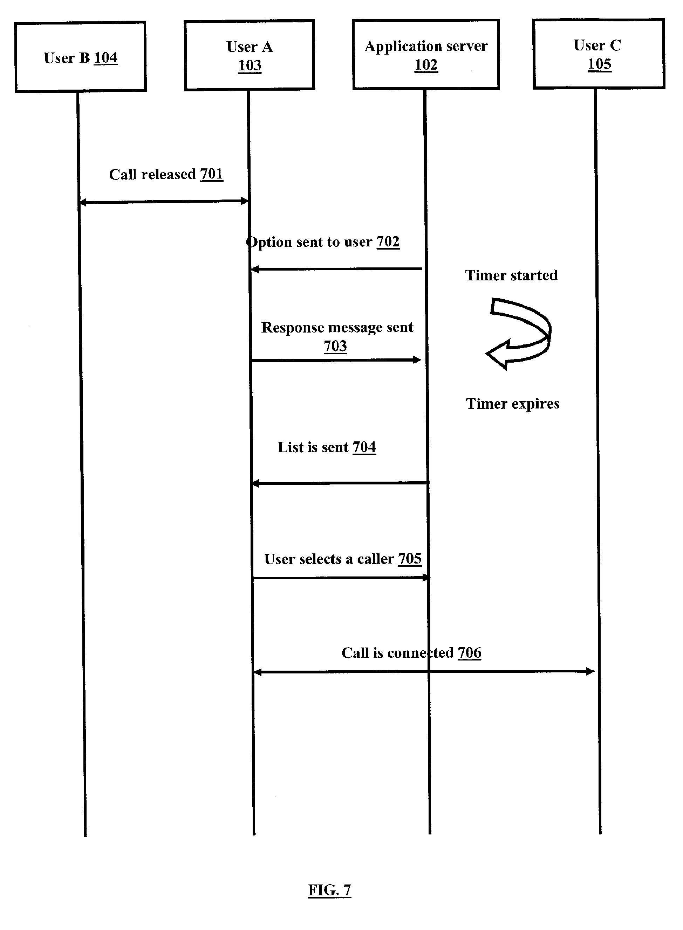

FIG. 7 is a flow diagram depicting a scenario of continuation of call queuing, according to an embodiment as disclosed herein. In the present scenario, call is released (701) between user A 103 and user B 105. On release of the call, user A 103 may be provided (702) with an option by the application server 102 if he would like to view the list of calls queued for him. User A 103 may have another call to make so he may reject to view the caller list queued immediately. A message may be then sent (703) to the application server 102 acknowledging that he would view the list later. On receiving such a message, the application server 103 may start a timer and continue maintaining the queue. The timer may expire and a check is made if user A 103 is still busy. In case, user A 103 is busy, timer is refreshed or a notification may be sent to user A 103 again to view his queued list. Further, the option to view the queued list is sent (704) to user A 103. Further, user A 103 may be ready to view the queued list; he may send a response requesting the queued list to the application server 102. User A 103 may select (705) user C 105 from the queued list to whom he would like to connect. The request is sent to the application server 102 and call is set up (706) between user A 103 and user C 105. The various actions in method 700 may be performed in the order presented, in a different order or simultaneously. Further, in some embodiments, some actions listed in FIG. 7 may be omitted.

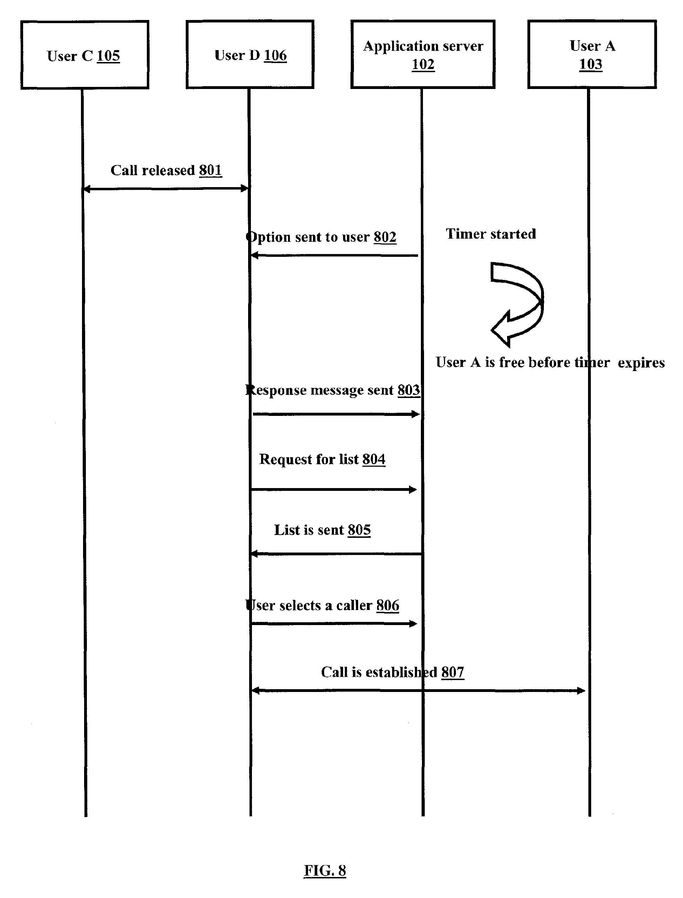

FIG. 8 is a flow diagram depicting a scenario of a user requesting for queued list, according to an embodiment as disclosed herein. The call between user A 103 and user B 104 is released (801). On release of the call, user A 103 is provided (802) with a list of his queued calls. User A 103 may have another call to make so he may send (803) a response that he would like to view the queued list later. The application server 102 then may start a timer and continue to maintain the queued list. The user A 103 may get free before the timer expires, in such case he may send (804) a request to the application server 102 requesting for the queued list. The application server 102 sends (805) the queued list to the user A 103. The user A 103 selects (806) user C 105 from the list of queued callers. Further, call is connected (807) to selected user C 105. The various actions in method 800 may be performed in the order presented, in a different order or simultaneously. Further, in some embodiments, some actions listed in FIG. 8 may be omitted.

The embodiments disclosed herein can be implemented through at least one software program running on at least one hardware device and performing network management functions to control the network elements. The network elements shown in Fig. 1 include blocks which can be at least one of a hardware device, or a combination of hardware device and software module.

The embodiment disclosed herein specifies a system for selective call queuing. The mechanism allows users to selectively queue a call when he is busy on another call by providing a system thereof. Therefore, it is understood that the scope of the protection is extended to such a program and in addition to a computer readable means having a message therein, such computer readable storage means contain program code means for implementation of one or more steps of the method, when the program runs on a server or mobile device or any suitable programmable device. The method is implemented in a preferred embodiment through or together with a software program written in e.g. Very high speed integrated circuit Hardware Description Language (VHDL) another programming language, C, C++, or implemented by one or more VHDL or several software modules being executed on at least one hardware device. The hardware device can be any kind of device which can be programmed including e.g. any kind of computer like a server or a personal computer, or the like, or any combination thereof, e.g. one processor and two FPGAs. Thus, the means are at least one hardware means and/or at least one software means. The method embodiments described herein could be implemented in pure hardware or partly in hardware and partly in software. The device may also include a combination of hardware and software means. Alternatively, the invention may be implemented on different hardware devices, e.g. using a plurality of CPUs.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the spirit and scope of the claims as described herein.

## Claims

1. An apparatus (102) for selective call queuing in a mobile communication network (101) configured with at least one means for
receiving a message from a called user for activation of selective call queuing service when desired by said user;
activating said selective call queuing service on receipt of said message from said user;
querying a caller if he would like to be placed in a queue on receiving an incoming call from said caller when said service is active; and
maintaining a list of said callers who would like to be placed in said queue.

2. The apparatus (102) as in claim 1, wherein said apparatus (102) is adapted for continuing said service for next call on request from said user.

3. The apparatus (102) as in claim 1, wherein said apparatus (102) is adapted for sending a notification message when said user's call is released.

4. The apparatus (102) as in claim 1, wherein said apparatus (102) is adapted for activating a timer on continuing said service for next call.

5. The apparatus (102) as in claim 1, wherein said apparatus (102) is adapted for discarding said queued list when viewed by said user.

6. The apparatus (102) as in claim 1, wherein said apparatus (102) is adapted for deactivating said service when said queued list is discarded.

7. The apparatus (102) as in claim 1, wherein said apparatus (102) is adapted for activation of said service when current call is on hold.

8. A method for selective call queuing in a mobile communication network (101) said method comprising of an application server (102), a called user (103), plurality of callers (104, 105 and 106) and comprising steps of
said called user sending a message to said application server (102) for activation of selective call queuing service;
said application server (102) activating said service for said called user on receipt of said message;
said application server (102) querying a caller if he would like to be placed in a queue on receiving an incoming call from said caller when said service is active;
said application server (102) maintaining a queued list of said caller; and
said application server (102) sending a notification to said called user to view said queued list.

9. The method as in claim 8, wherein said queued list is sent to said user after said call is released.

10. The method as in claim 8, wherein said queued list is discarded after said user views said recorded list.

11. The method as in claim 8, wherein said selective call queuing is activated on per call basis.

12. The method as in claim 8, wherein said queued list includes details of callers who are in queue.

13. The method as in claim 8, wherein details of callers who left the queue is provided separately to said user.

14. The method as in claim 8, wherein said queued list is discarded when said called user does not wish to connect to any callers in said recorded list.
